# EUROPEAN PATENT APPLICATION

(11) **EP 4 800 606 A1**
(43) Date of publication of application: **02.09.2026**
(21) Application number: 25160311.4
(22) Date of filing: 26.02.2025
(51) Int. Cl.: G06N 3/0475

(54) **DEVICE AND METHOD FOR METHOD FOR DETERMINING AN UNCERTAINTY OF A SENSOR SIGNAL SYNTHESIZED BY A GENERATIVE MACHINE LEARNING SYSTEM**

(71) Applicant: Robert Bosch GmbH, 70442 Stuttgart (DE)
(72) Inventor: Zhang, Dan, 71229 Leonberg (DE); Jazbec, Metod, 1012BH Amsterdam (NL); Nalisnick, Eric, Ellicott City, Maryland, 21043 (US)

(57) **Abstract**

Computer-implemented method (900) for determining an uncertainty (u) of a sensor signal (*x*₁*,x*₂,*x_{M}*) synthesized by a generative machine learning system (61) with respect to how likely it is to observe the sensor signal (*x*₁,*x*₂,*x_{M}*) in physical reality comprising the steps of:
• Obtaining (901) a noise sample (*z*);
• Performing (902) Bayesian Inference on the generative machine learning (61) system using the noise sample (*z*) as input to the generative machine learning system (61) thereby determining a posterior predictive distribution of the sensor signal that would have been synthesized by the generative machine learning system (61) using the noise sample (*z*) as input to the generative machine learning system (61);
• Providing (903) a measure of variability of the posterior predictive distribution as uncertainty with respect to a sensor signal (*x*₁*,x*₂,*x_{M}*) synthesized from the noise sample (*z*),

**wherein the method is characterized in**
the posterior predictive distribution characterizing a distribution of latent features (*e*₁,*e*₂,*e_{M}*) of the sensor signal (*x*₁*,x*₂,*x_{M}*) that would have been generated using the noise sample (*z*) as input.

## Description

### Prior art

Kuo et al. "BayesDiff: Estimating Pixel-wise Uncertainty in Diffusion via Bayesian Inference ", 2024, https://arxiv.org/abs/2310.11142 discloses BayesDiff.

Berry and Meger "Efficient Epistemic Uncertainty Estimation in Regression Ensemble Models Using Pairwise-Distance Estimators", 2024, https://arxiv.org/abs/2308.13498 discloses pairwise-distance estimators for probability distributions.

### Technical background and advantages of the invention

Moden technical systems interacting with physical reality typically require some form of internal model for modelling the current state of a respective environment in order to decide on which action to perform. Such models may be implemented in form of machine learning models that are capable of processing sensor signals of the technical system's environment in order to extract meaningful information such as the presence of other objects, humans, or animals.

For determining conditions of physical reality based on sensor signals, such machine learning systems typically require a vast amount of data in order to make accurate predictions. Obtaining such data is a cumbersome and cost-intensive task. Hence, generative methods may be employed in order to determine sensor signals as would have occurred in physical reality. Conditional generative models additionally allow for providing additional information to the generation process in order to defined desired properties that shall be present in a generated sensor signal.

While generative models such as StableDiffusion are able to achieve the generation of very realistic sensor signals, generative models are machine learning models and may hence suffer from inaccurate modelling of a probability distribution of sensor signals obtained from physical reality and may hence provide output that does not represent a sensor signal from physical reality well (e.g., it may contain artifacts or values that are highly unlikely or impossible when recording sensor signals from physical reality).

It is hence desirable to identify sensor signals generated (also referred to as "synthesized") from a generative machine learning system that are not likely to occur in physical reality. Known methods such as BayesDiff use Bayesian Inference in order to determine an uncertainty score with respect to a generated sensor signal in order to judge a likelihood of the generated sensor signal to be an accurate representation of a possible condition in physical reality. High uncertainty may be understood as a synthesized sensor signal being of of low-quality (e.g., containing artefacts), whereas a low uncertainty uncertainty can be understood as the synthesized sensor signal likely being of high-quality (e.g., crisp, 'real' looking)

However, the inventors found that common methods assess uncertainty of the generative process based on the generated values of a sensor signal. For example, when generating images, the uncertainty is assess based on pixel-level differences. Empirically, the inventors found that this assessment of uncertainty based on "raw" values of synthesized sensor signals leads to non-informative estimates of generative uncertainty. For example, assessing pixel-level differences in images generated form a machine learning system may lead to high uncertainty scores if only a small amount of pixels differ largely from a numerical point of view.

Advantageously, the method with features of claim 1 circumvents this problem. In particular, the method assesses uncertainty of a synthesized sensor signal by means of determining an uncertainty of latent factors (also known as latent features) of the generated sensor signal. By not relying on the values of the sensor signal but on latent factors, the assessment of uncertainty is made on a "semantic" level of a generated sensor signal, in other words, the content of the sensor signal is assessed for uncertainty and not its raw values. Empirically, the inventors that such an approach leads to a more precise prediction of validity of a synthesized sensor signal with respect to physical reality, which in turn leads to more accurate machine learning systems trained using such generated data or a more reliable estimation of performance of a machine learning system if it is tested with samples of low uncertainty.

### Disclosure of the invention

In a first aspect, the invention concerns a computer-implemented method for determining an uncertainty of a sensor signal synthesized by a generative machine learning system with respect to how likely it is to observe the sensor signal in physical reality comprising the steps of:
- Obtaining a noise sample;
- Performing Bayesian Inference on the generative machine learning system using the noise sample as input to the generative machine learning system thereby determining a posterior predictive distribution of the sensor signal that would have been synthesized by the generative machine learning system using the noise sample as input to the generative machine learning system;
- Providing a measure of variability of the posterior predictive distribution as uncertainty with respect to a sensor signal synthesized from the noise sample
   **wherein the method is characterized in**
   the posterior predictive distribution characterizing a distribution of latent features of the sensor signal that would have been generated using the noise sample as input.

The method may be understood as generating a synthetic sensor signal while also assessing an uncertainty about this sensor signal, i.e., how likely the synthesized sensor signal may actually be with respect to physical reality. Physical reality may be understood to be modelled through the generative machine learning system: For generating synthetic samples of sensor signals, the generative machine learning system can be understood to require a training based on a sample set of sensor signals as recorded form physical reality. The generative machine learning systems is then capable to "model" physical reality through the empiric distribution of sensor signals used for training the generative machine learning system.

The generative machine learning system can be understood to be configured to accept a sample form a noise distribution as input and provide an output characterizing a synthesized sensor signal. The output characterizing a synthesized sensor signal may be further understood as the output comprising or consisting of a synthesized sensor signal. For configuring a generative machine learning system to accomplish this, the generative machine learning system may especially be trained to make samples from a noise distribution to samples from a distribution of sensor signals. For training, the distribution of sensor signals may especially be represented by empirical samples of sensor signals recorded from physical reality.

In general, the generative machine learning system may provide its outputs unconditionally (e.g., using only the noise distribution sample as input) or conditionally (e.g., using additional information as input with respect to what shall be represented in the synthesized sensor signal). The method itself is agnostic to the actual inputs of the generative machine learning model. For example, the generative machine learning model may comprise or consist of a normalizing flow, a continuous normalizing flow, a conditional normalizing flow, a neural ODE obtained through, e.g., flow matching, conditional flow matching, variational flow matching, conditional variational flow matching, a diffusion model, or a conditional diffusion model.

The method makes use of Bayesian Inference in order to determine an uncertainty with respect to its output. In particular, Bayesian Inference may be based on either the generative machine learning system modelling its parameters through distributions of parameters. Alternatively and when using a neural network as or in the generative machine learning system, last layer Laplacian approximation may be used to turn an otherwise "point estimate" of parameters of the generative machine learning system into a distribution of parameters of the generative machine learning system. Advantageously, the method can hence be used "post-hoc" for any generative machine learning system, i.e., the method does not require the generative machine learning system to use distributions of its parameters.

The posterior predictive characterizing a distribution of latent features of the sensor signal may be understood as the distribution of latent features being the posterior predictive distribution. Alternatively, characterizing may involve processing methods of the latent features distribution, e.g., a scaling of the latent distribution or processing (e.g., normalizing or scaling) the latent features before determining a distribution of the latent features.

Obtaining the noise sample may be understood as drawing the noise sample from a noise distribution. Alternatively, the noise sample may also be provided as input to the method, e.g., as an input that shall be used to synthesize sensor signals later but for which it shall first be assessed whether the respective noise sample would yield a realistic sensor signal.

In general, common generative machine learning systems sample outputs (e.g., sensor signals) by using a noise sample as input. The method for determining an uncertainty may hence be viewed as a checking mechanism to determine whether a sensor signal sampled using a specific noise sample as input to the generative machine learning system would be uncertain or not, in other words, whether the sensor signal would be probable or not given the training data of the generative machine learning system.

In preferred embodiments, determining the predictive posterior distribution may further comprise the steps of:
- Drawing a plurality of synthesized sensor signals from the generative machine learning system using Monte Carlo sampling;
- Determining respective latent features of the synthesized sensor signals;
- Determining the distribution of the latent features based on the determined latent features;
- Providing the Distribution of latent features as predictive posterior distribution.

In other words, sensor signals may be sampled from the machine learning model in order to approximate the posterior predictive distribution. For this, the sampled sensor signals are then processed in order to extract latent features characterizing the respective sensor signals. Afterwards, the distribution of latent features can be determined based on these samples of latent features.

Advantageously, these preferred embodiments do not incur propagating probability distributions through the generative process such as BayesDiff. Samples of the parameters (also referred to as weights) of the generative machine learning model may be drawn at random and then used as fixed parameters in the model in order to determine a synthetic sensor signal. The determined sensor signal may then directly be used for extracting the latent features. This way, determining the posterior predictive distribution is substantially more computationally efficient than known methods.

In preferred embodiments, the latent features are determined by a feature extractor, wherein the feature extractor is configured to accept a sensor signal as input and provide a latent feature of the sensor signal as output.

Feature extractors for extracting features from provided sensor signals are known in the art, especially those that are able to learn the feature extraction in an unsupervised manner. Common methods include (variational) autoencoders, (normalizing) flows, or diffusion models. However, a feature extractor may also be trained supervisedly, e.g., through contrastive learning. For example, when using images as sensor signals to be put out by the generative machine learning system, the inventors found the visual model of a CLIP model to perform well as feature extractor. A CLIP-like approach can, however, also be used for other modalities of sensor signals. For example, any type of sensor signal could be used in a CLIP-like approach using a generic model as the equivalent of "visual model" and training can then be conducted using the standard CLIP-approach (e.g., using pairs of sensor signals and textual descriptions of the respective sensor signals as input).

Training the feature extractor may be an optional further step in the method.

In particular, the distribution of latent features may be characterized by the formula: $p \left(x\left|z, D\right.\right) \approx N \left(e\left(x\right)\left|\overline{e},Diag\left(\frac{1}{M}{\sum }_{m = 1}^{M} {e}_{m}^{2} - \overline{{e}^{2}}\right)+{σ}^{2}\right.\right) ,$ wherein M is the number of samples used during Monte Carlo sampling, *eₘ* is the latent feature determined for the m-th sample drawn during Monte Carlo sampling, $\overline{e} = \frac{1}{M} {\sum }_{m = 1}^{M} {e}_{m}$, *z* is the noise sample, *D* is a training dataset of the generative machine learning system and *σ²* is an optional offset of the covariance matrix (either scalar or as a matrix comprising an offset for each element of the covariance matrix).

In another aspect, the invention concerns a computer-implemented method for creating or augmenting a dataset for training and/or testing a machine learning system, wherein the method comprises the steps of:
- Drawing a noise sample from a noise distribution;
- Providing the noise sample to the method for determining an uncertainty as presented above;
- If the uncertainty is equal to or below a predefined threshold:
   - Synthesizing a sensor signal from the generative machine learning system used in the method for determining an uncertainty, wherein the sensor signal is synthesized using the noise sample as input;
   - Adding the synthesized sensor signal to the dataset thereby creating or augmenting the training dataset.

Advantageously, the method allows for only including sensor signals into the dataset that are actually "realistic" with respect to the sensor signals sampled form physical reality for training the generative machine learning system. Consequently, this leads to training and/or testing the machine learning model only with high-quality sensor signals, in other words, sensor signals comprising artifacts that would make them unrealistic with respect to the real world are not included in the dataset. For a training dataset, this leads to training the machine learning system only with high quality synthetic sensor signals which in turn improves the performance of the machine learning system. For testing, the test results are more trustworthy since they only relate to sensor signals that could actually occur in the real world and do not constitute artifacts.

If the measure of variability does not fulfill the if-statement, a new noise sample may be drawn and the steps of the method may be repeat.

"Synthesizing a sensor signal from the generative machine learning system used in the method for determining an uncertainty" may be understood using a same generative machine learning system as is used for assessing the uncertainty. This may also be understood as the steps for assessing the uncertainty being part of the method for creating and/or augmenting the dataset.

If the uncertainty is equal to or below the predefined threshold, a sensor signal is synthesized from the generative machine learning system using the noise sample as input. For Bayesian models, a mean mode of parameters (e.g., the expected value for each parameter) may be chosen as point estimate to then determine the synthesized sensor signal with these "frozen" parameters. If the generative machine learning system is provided with point estimates for parameters and, e.g., last layer Laplacian approximation is used for Bayesian inference, the point estimate of parameters in the supplied generative machine learning system, i.e., its original parameters, may be used for determining the synthesized sensor signal using the noise sample as input.

In another aspect the invention concerns a computer-implemented method for training and/or testing a machine learning system comprising the steps of:
- Creating a training and/or testing dataset according to the method for creating and/or augmenting a dataset;
- Training and/or testing the machine learning system using the dataset.

As part of the method, the sensor signals used in the dataset may also be annotated by a human annotator or an automatic annotation method. The machine learning system may then be trained supervisedly.

In the different embodiments of all methods presented above, the sensor signal may be a digital image or an audio signal. The machine learning system trained on this data

In the different embodiments of all methods presented above, the variability of the measure of variability of the posterior predictive distribution may be an entropy of the posterior predictive distribution or wherein the variability is determined based on the posterior predictive distribution using a pairwise-distance estimator.

Embodiments of the invention will be discussed with reference to the following figures in more detail. The figures show:
- Figure 1: a flow-diagram of a method for determining uncertainty of a sensor signal synthesized from a generative machine learning system;
- Figure 2: a schematic plan of a method for creating a dataset;
- Figure 3: a training system for training a machine learning system using the dataset;
- Figure 4: a control system comprising the machine learning system controlling an actuator in its environment;
- Figure 5: the control system controlling an at least partially autonomous robot;
- Figure 6: the control system controlling a manufacturing machine.

### Description of the embodiments

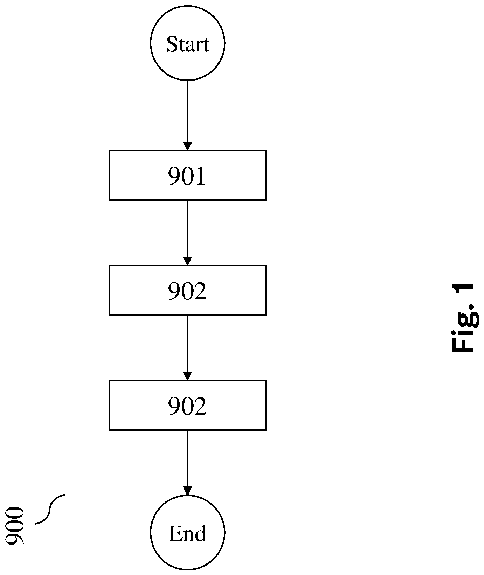

Figure 1 shows a flow-diagram of a computer-implemented method (900) for determining an uncertainty of a sensor signal synthesized by a generative machine learning system with respect to how likely it is to observe the sensor signal in physical reality.

In the method, the generative machine learning system is obtained as input to the method. The generative machine learning system is configured to accept a noise sample as input and provide a synthesized sensor signal as output. Optionally, the generative machine learning system may also be trained in a step of the method (not shown). The generative machine learning system may especially be a diffusion model, in particular a stable diffusion model or a diffusion model adapted by adapters such as ControlNet or LoRA. In particular, the generative machine learning model may consist of or may comprise a neural network for generating the sensor signal.

In the concrete embodiment depicted in figure 1, the generated sensor signals are digital images but other modalities of sensor signals are possible in the method as well.

In a first step (901) of the method, a noise sample is obtained. The obtaining may either be achieved by accepting the noise sample as input or sampling the noise sample from a predefined probability distribution, in particular a normal distribution and even more particular a multi-variate normal distribution. The noise sample may be given in the form of a vector of real values, i.e., it may be sampled from a real-valued multi-variate probability or density distribution.

In a second step (902) of the method, the noise sample is used as input to the generative machine learning model in order to perform Bayesian Inference on the generative machine learning system. As a result of Bayesian inference, a posterior predictive distribution of the sensor signal that would have been synthesized by the generative machine learning system using the noise sample as input to the generative machine learning system is determined. The posterior predictive distribution is configured to characterize a distribution of latent features of the sensor signal that would have been generated using the noise sample as input. This may especially be achieved by Monte Carlo sampling the generative machine learning system in order to draw multiple samples of synthetic sensor signals, from which respective latent features are extracted, thereby determining a sample of latent features. From these samples a probability distribution of the latent features may be determined, e.g., by means of maximum likelihood estimation using a predefined family of probability distributions.

In a third step, a measure of variability of the posterior predictive distribution is provided as uncertainty with respect to the sensor signal synthesized based on the noise sample.

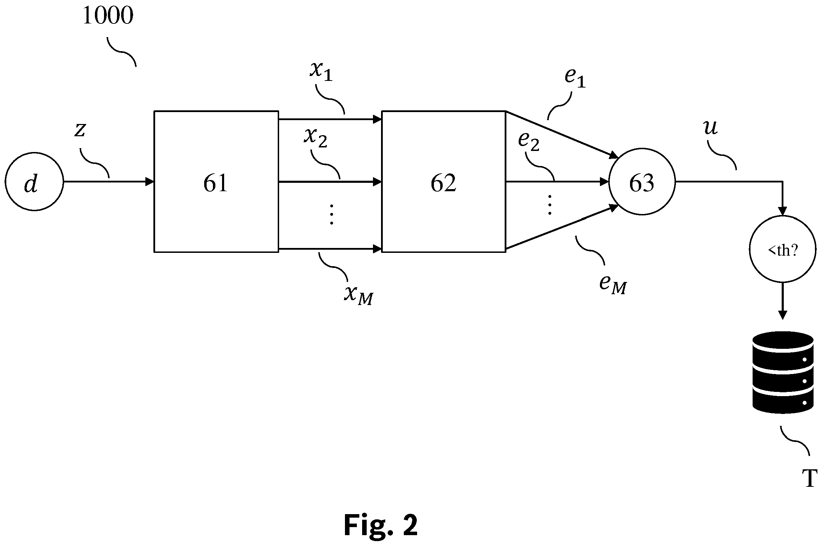

Figure 2 schematically shows how to use the method of claim 1 in a method (1000) for creating or augmenting a dataset (T). The noise sample (*z*) is drawn from a probability distribution (*d*), wherein the probability distribution may especially match a probability distribution used for training the generative machine learning system (61). The noise sample (*z*) is provided as input to the generative machine learning system (61). In the embodiment, the generative machine learning system (61) is a stable diffusion model configured to generate images based on the noise sample (*z*) but other generative machine leaning systems and respective modalities of sensor signals are possible as well. For performing Bayesian Inference, last layer Laplacian approximation is used in the embodiment. By Monte Carlo sampling weights of the generative machine learning system (61) und using these weights for inference, a plurality of sensor signal (*x*₁*x*₂*, x_{M}*) (i.e., images) is sampled from the generative machine learning system. The images (*x*₁, *x*₂, *x_{M}*) are provided as input to a feature extractor (62) in order to extract latent features (*e*₁*, e*₂*, e_{M}*) for the respective images (*x*₁, *x*₂, *x_{M}*)*.* In the embodiment, the feature extractor is given by the visual model of a CLIP model. Other feature extractor models are also possible.

The extracted plurality of latent features (*e*₁*, e*₂*, e_{M}*) may then be used in an uncertainty module (63) for determining an uncertainty with respect to the sensor signal (i.e., image) generated from the noise sample (*z*). The uncertainty module (63) may especially estimate a distribution of the latent features (*e*₁*, e*₂*, e_{M}*), e.g., using maximum likelihood estimation. In particular, the latent features (*e*₁*, e*₂*, e_{M}*) may be used to estimate a mean and a covariance matrix of multi-variate normal distribution. In particular, the estimation may be achieved according to the formula: $p \left(x\left|z, D\right.\right) \approx N \left(e\left(x\right)\left|\overline{e},Diag\left(\frac{1}{M}{\sum }_{m = 1}^{M} {e}_{m}^{2} - \overline{{e}^{2}}\right)+{σ}^{2}\right.\right) ,$ wherein *M* is the number of samples used during Monte Carlo sampling, *eₘ* is the latent feature determined for the *m*-th sample drawn during Monte Carlo sampling, $\overline{e} = \frac{1}{M} {\sum }_{m = 1}^{M} {e}_{m}$, *z* is the noise sample, *D* is a training dataset of the generative machine learning system and *σ*² is an optional offset of the covariance matrix.

The uncertainty module (63) may then determine a measure of variability of this distribution (also referred to as posterior predictive distribution) as uncertainty (*u*). Preferably, an entropy of the posterior predictive distribution may be provided as uncertainty but other methods such as pairwise-distance estimators may also be used in order to measure the variability of the posterior predictive distribution. Up to this step, the method (1000) may be seen as an embodiment of the method for determining an uncertainty (900). The method (1000) may then proceed further by determining, whether the uncertainty is equal to or below a predefined threshold (th). If the uncertainty (*u*) is equal to or below the predefined threshold, the image determined for the noise sample (*z*), i.e., the image that is generated using the noise sample (*z*) as input and using either the point estimate of the parameters of the generative machine learning system (61) or an expected value of the posterior predictive distribution of the generative machine learning system (61) itself is input to the dataset (T) thereby creating and/or augmenting the dataset (T).

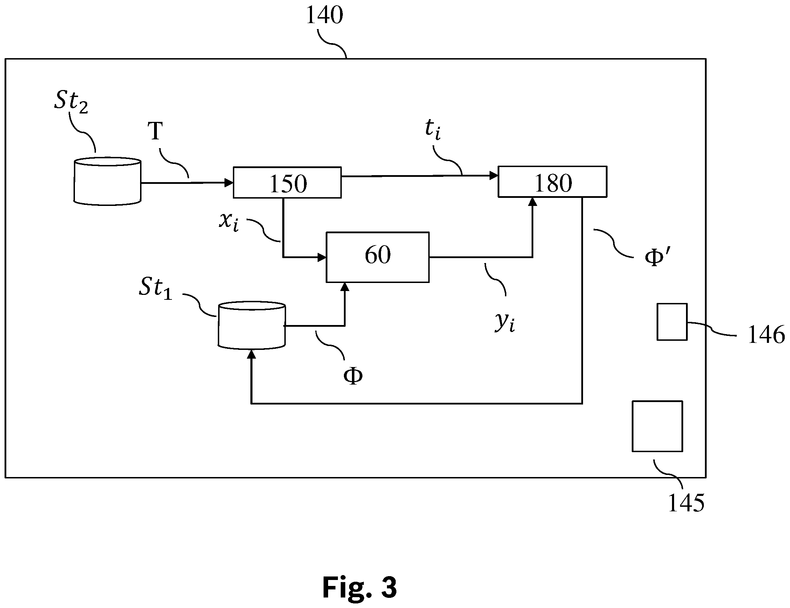

Figure 3 shows an embodiment of a training system (140) for training a machine learning system (60) using the dataset (T) as training data set (T). The training data set (T) comprises a plurality of input signals (*xᵢ*) (i.e., images) which are used for training the machine learning system (60), wherein the training data set (T) further comprises, for each input signal (*xᵢ*), a desired output signal (*tᵢ*) which corresponds to the input signal (*xᵢ*) and characterizes a classification or a regressions result (i.e. a continuous value) associated with the input signal (*xᵢ*).

For training, a training data unit (150) accesses a computer-implemented database (St₂), the database (St₂) providing the training data set (T). The training data unit (150) determines from the training data set (T) preferably randomly at least one input signal (*xᵢ*) and the desired output signal (*tᵢ*) corresponding to the input signal (*xᵢ*) and transmits the input signal (*xᵢ*) to the machine learning system (60). The machine learning system (60) determines an output signal (*yᵢ*) based on the input signal (*xᵢ*).

The desired output signal (*tᵢ*) and the determined output signal (*yᵢ*) are transmitted to a modification unit (180).

Based on the desired output signal (*tᵢ*) and the determined output signal (*yᵢ*), the modification unit (180) then determines new parameters (Φ') for the machine learning system (60). For this purpose, the modification unit (180) compares the desired output signal (*tᵢ*) and the determined output signal (*yᵢ*) using a loss function. The loss function determines a first loss value that characterizes how far the determined output signal (*yᵢ*) deviates from the desired output signal (*tᵢ*). In the given embodiment, a negative log-likehood function is used as the loss function. Other loss functions are also conceivable in alternative embodiments.

Furthermore, it is conceivable that the determined output signal (*yᵢ*) and the desired output signal (*tᵢ*) each comprise a plurality of sub-signals, for example in the form of tensors, wherein a sub-signal of the desired output signal (*tᵢ*) corresponds to a sub-signal of the determined output signal (*yᵢ*). It is conceivable, for example, that the machine learning system (60) is configured for object detection and a first sub-signal characterizes a probability of occurrence of an object with respect to a part of the input signal (*xᵢ*) and a second sub-signal characterizes the exact position of the object. If the determined output signal (*yᵢ*) and the desired output signal (*tᵢ*) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters (Φ') based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters (Φ') determined in a previous iteration are used as parameters (Φ) of the machine learning system (60).

Furthermore, the training system (140) may comprise at least one processor (145) and at least one machine-readable storage medium (146) containing instructions which, when executed by the processor (145), cause the training system (140) to execute a training method according to one of the aspects of the invention.

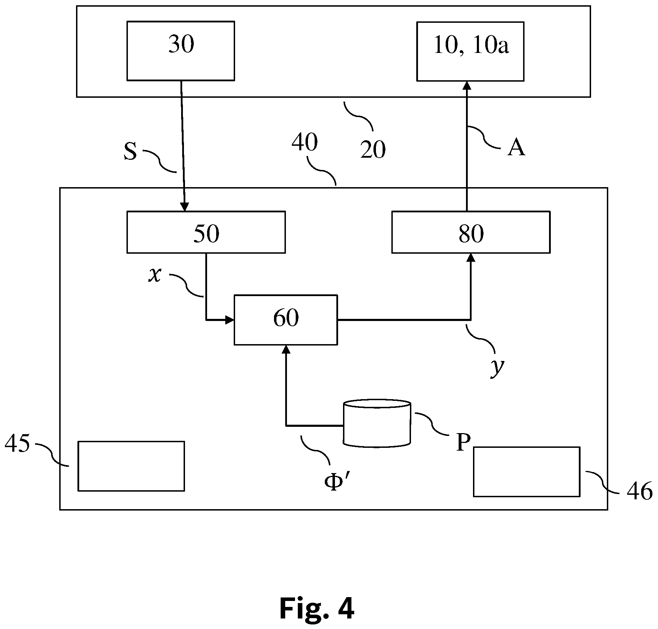

Figure 4 shows an embodiment of a control system (40) for controlling an actuator (10) or a display (10a) using the machine learning system (60). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (x). Alternatively, in case of no receiving unit (50), each sensor signal (S) may directly be taken as an input signal (x). The input signal (x) may, for example, be given as an excerpt from the sensor signal (S). Alternatively, the sensor signal (S) may be processed to yield the input signal (*x*). In other words, the input signal (*x*) is provided in accordance with the sensor signal (S).

The input signal (x) is then passed on to the machine learning system (60).

The machine learning system (60) is parametrized by parameters (Φ), which are stored in and provided by a parameter storage (*St*₁)*.*

The machine learning system (60) determines an output signal (y) from the input signals (*x*). The output signal (y) comprises information that assigns one or more labels to the input signal (x). The output signal (*y*) is transmitted to an optional conversion unit (80), which converts the output signal (*y*) into the control signals (A). The control signals (A) are then transmitted to the actuator (10) for controlling the actuator (10) accordingly. Alternatively, the output signal (*y*) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

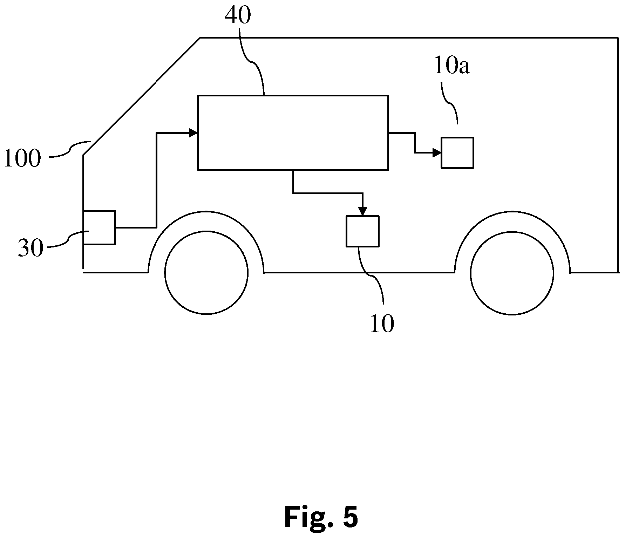

Figure 5 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100).

The machine learning system (60) may be configured to detect objects in the vicinity of the at least partially autonomous robot based on the input image (x). The output signal (y) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the machine learning system (60) deems them most likely to be, e.g., pedestrians or trees, and the control signal (A) may be determined depending on the classification.

Alternatively or additionally, the control signal (A) may also be used to control the display (10a), e.g., for displaying the objects detected by the machine learning system (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

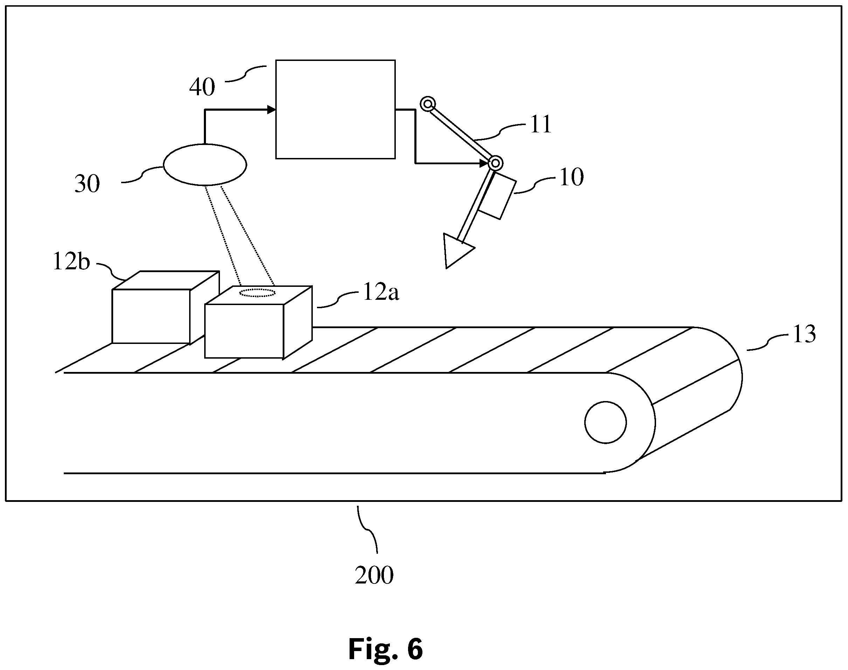

Figure 6 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The machine learning system (60) may hence be understood as an image classifier.

The machine learning system (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the machine learning system (60) classifies, whether the manufactured product is broken and/or exhibits a defect. The actuator (10) may then be controlled as to remove the manufactured product from the transportation device.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises *N* elements, wherein *N* is the number of elements in the plurality, the elements are assigned the integers from 1 to *N.* It may also be understood that elements of the plurality can be accessed by their index.

## Claims

1. Computer-implemented method (900) for determining an uncertainty (*u*) of a sensor signal (*x*₁, *x*₂, *x_{M}*) synthesized by a generative machine learning system (61) with respect to how likely it is to observe the sensor signal (*x*₁, *x*₂, *x_{M}*) in physical reality comprising the steps of:
• Obtaining (901) a noise sample (*z*);
• Performing (902) Bayesian Inference on the generative machine learning (61) system using the noise sample (*z*) as input to the generative machine learning system (61) thereby determining a posterior predictive distribution of the sensor signal that would have been synthesized by the generative machine learning system (61) using the noise sample (*z*) as input to the generative machine learning system (61);
• Providing (903) a measure of variability of the posterior predictive distribution as uncertainty with respect to a sensor signal (*x*₁, *x*₂, *x_{M}*) synthesized from the noise sample (*z*),
**wherein the method is characterized in**
the posterior predictive distribution characterizing a distribution of latent features (*e*₁*, e*₂, *e_{M}*) of the sensor signal (*x*₁, *x*₂, *x_{M}*) that would have been generated using the noise sample (*z*) as input.

2. Method (900) according to claim 1, wherein determining the predictive posterior distribution comprises the steps of:
• Drawing a plurality of synthesized sensor signals (*x*₁, *x*₂, *x_{M}*) from the generative machine learning system (61) using Monte Carlo sampling;
• Determining respective latent features (*e*₁, *e*₂*, e_{M}*) of the synthesized sensor signals (*x*₁*, x*₂*, x_{M}*);
• Determining the distribution of the latent features (*e*₁, *e*₂*, e_{M}*) based on the determined latent features (*e*₁*, e*₂*, e_{M}*);
• Providing the distribution of latent features (*e*₁*, e*₂*, e_{M}*) as predictive posterior distribution.

3. Method (900) according to claim 2, wherein the latent features are (*e*₁*, e*₂, *e_{M}*) determined by a feature extractor (62), wherein the feature extractor (62) is configured to accept a sensor signal as input (*x*₁*, x*₂*, x_{M}*) and provide a latent feature (*e*₁*, e*₂*, e_{M}*) of the sensor signal (*x*₁, *x*₂*, x_{M}*) as output.

4. Method (900) according to any one of the preceding claims, wherein the distribution of latent features (*e*₁*, e*₂*, e_{M}*) is **characterized by** the formula: $p \left(x\left|z, D\right.\right) \approx N \left(e\left(x\right)\left|\overline{e},Diag\left(\frac{1}{M}{\sum }_{m = 1}^{M} {e}_{m}^{2} - \overline{{e}^{2}}\right)+{σ}^{2}\right.\right) ,$ wherein *M* is the number of samples used during Monte Carlo sampling, *eₘ* is the latent feature determined for the *m*-th sample drawn during Monte Carlo sampling, $\overline{e} = \frac{1}{M} {\sum }_{m = 1}^{M} {e}_{m}$, *z* is the noise sample, *D* is a training dataset of the generative machine learning system and *σ²* is an optional offset of the covariance matrix.

5. Computer-implemented method (1000) for creating or augmenting a dataset (T) for training and/or testing a machine learning system (60), wherein the method comprises the steps of:
• Drawing a noise sample (*z*) from a noise distribution (*d*);
• Providing the noise sample (*z*) to the method (900) according to any one of the claims 1 to 4, thereby determining an uncertainty;
• If the uncertainty is equal to or below a predefined threshold (th):
• Synthesizing a sensor signal from the generative machine learning system (61) used in the method according to any one of the claims 1 to 4, wherein the sensor signal is synthesized using the noise sample as input to the generative machine learning system (61);
• Adding the synthesized sensor signal to the dataset (T) thereby creating or augmenting the dataset (T).

6. Computer-implemented method for training and/or testing a machine learning system (60) comprising the steps of:
• Creating a training and/or testing dataset (T) according to claim 5;
• Training and/or testing the machine learning system (60) using the dataset (T).

7. Method according to any one of the preceding claims, wherein the sensor signal (*x*₁*, x*₂*, x_{M}*) is a digital image or an audio signal.

8. Method according to any one of the preceding clams, wherein the variability of the measure of variability of the posterior predictive distribution is an entropy of the posterior predictive distribution or wherein the variability is determined based on the posterior predictive distribution using a pairwise-distance estimator.

9. Training system (140), which is configured to carry out the training method according to any one of the claims 6.

10. Control system (40), which is configured to determine a control signal (A) based on a classification of a machine learning system according to claim 6, wherein the control signal (A) is configured to control an actuator (10) and/or a display (10a).

11. Computer program that is configured to cause a computer to carry out the method according to any one of the claims 1 to 8 with all of its steps if the computer program is carried out by a processor (45, 145).

12. Machine-readable storage medium (46, 146) on which the computer program according to claim 11 is stored.
